(19) **Europäisches Patentamt**
**European Patent Office**
**Office européen des brevets**

(11) **EP 4 318 675 A1**

(12) **EUROPEAN PATENT APPLICATION**
published in accordance with Art. 153(4) EPC

(43) Date of publication:
**07.02.2024 Bulletin 2024/06**

(21) Application number: **22781204.7**

(22) Date of filing: **30.03.2022**

(51) International Patent Classification (IPC):
$H01M\ 4/587$ (2010.01)    $H01G\ 11/06$ (2013.01)
$H01G\ 11/30$ (2013.01)    $H01G\ 11/42$ (2013.01)
$H01M\ 4/36$ (2006.01)    $H01M\ 4/48$ (2010.01)

(52) Cooperative Patent Classification (CPC):
H01G 11/06; H01G 11/30; H01G 11/42; H01M 4/36;
H01M 4/48; H01M 4/587; Y02E 60/10

(86) International application number:
**PCT/JP2022/016349**

(87) International publication number:
**WO 2022/210994 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2021 JP 2021061768**

(71) Applicant: **Toda Kogyo Corp.**
**Hiroshima-shi, Hiroshima 732-0828 (JP)**

(72) Inventors:
• **KOBAYASHI, Nobuyuki**
**Otake-shi, Hiroshima 739-0652 (JP)**
• **KUROKAWA, Haruki**
**Otake-shi, Hiroshima 739-0652 (JP)**

(74) Representative: **J A Kemp LLP**
**80 Turnmill Street**
**London EC1M 5QU (GB)**

(54) **SILICON-CONTAINING AMORPHOUS CARBON PARTICLE, MANUFACTURING METHOD THEREFOR, AND LITHIUM-ION SECONDARY BATTERY**

(57)    The purpose of the present invention is to provide a negative electrode material for a lithium ion secondary battery, which is improved in the capacity retention rate. The aspect of the present invention, there is provided silicon-containing amorphous carbon particles comprising an easy-graphitizable amorphous carbon containing silicon oxide particles having a chemical formula represented by $SiO_x$ (0<x<2), which silicon-containing amorphous carbon particles are spherical particles comprising a core particle present at the center portion and a shell layer formed on the outside of core particle, in which voids are present not only between said core particle and said shell layer but also in the shell layer.

[FIG. 1]

EP 4 318 675 A1

**Description**

TECHNICAL FIELD

The present invention relates to silicon-containing amorphous carbon particles used for negative electrodes of lithium ion secondary battery and producing method thereof.

BACKGROUND ARTS

Lithium ion secondary batteries have been practically used as a power supply for driving portable electronic devices such as mobile phones, notebook-type computers, etc. because of lightweight and having a high capacity compared to conventional secondary batteries such as nickel-cadmium batteries, nickel-hydrogen batteries and lead batteries. It is also used as a power source for electric vehicles and hybrid vehicles.

As a negative electrode material, silicon, tin, germanium, oxides thereof and the like which can be alloyed with lithium, can be used. However, these materials have a problem that the volume thereof is expanded when charging of lithium ions and is contracted when discharging lithium ions. As a result, there is a possibility that the negative electrode material are dropped out and collapsed from the electrode due to the volume change in repeating the charge/discharge cycle.

In Patent Literature 1, there is described an active material for a lithium ion secondary battery containing silicon oxide and a carbon material. Since this active material has voids therein, the volume change during charging and discharging is controlled to be small.

In Patent Literature 2, there is described a method for preventing electrode destruction during charging and discharging such that lithium storage material particles are embedded in a carbon material as well as the size of the lithium storage material particles is reduced.

In Patent Literature 3, there is described an amorphous carbon material containing $SiO_x$ ($0<x<2$) in an easily graphitized amorphous carbon, which amorphous carbon material is produced by a method comprising mixing and granulating a raw coke and silicon particles or silicon oxide particles and carbonizing the obtained granulated product. By using this amorphous carbon material, the volume change during charging and discharging is small and the cycle performances can be improved.

CITATION LIST:

PATENT LITERATURE

Patent Literature 1: Japanese Patent Application Laid-Open (KOKAI) No. 2013-30428
Patent Literature 2: Japanese Patent Application Laid-Open (KOKAI) No. 2005-71938
Patent Literature 3: Japanese Patent Application Laid-Open (KOKAI) No. 2015-90748

SUMMARY OF INVENTION

TECHNICAL PROBLEM

However, since the active material for the lithium ion secondary battery described in Patent Literature 1 is obtained by carbonizing a sprayed resin aqueous solution together with a colloidal silica, the shape thereof is approximately a true sphere and has a sharp particle size distribution. Therefore, since there is a few contact point of respective particles each other when making an electrode using thereof, there is a need for such a technique that a large amount of conductive material should be mixed. In addition, the method described in Patent Literature 1 is not practical because many production steps of the active material are required.

The technique described in Patent Literature 2, the volume change when lithium is occluded and released in the lithium storage material particles is controlled at some level but is not sufficiently controlled. Therefore, it is difficult to sufficiently prevent the destruction of negative electrode and to sufficiently improve the cycle performances.

In the technique described in Patent Literature 3, although the cycle performances are improved, the initial discharge capacity and the initial efficiency are low.

To the above problems in the prior arts, an object of the present invention is to provide a negative electrode material for a lithium ion secondary battery, which is improved in the capacity retention rate.

SOLUTION TO PROBLEM

That is, in a first aspect of the present invention, there is provided silicon-containing amorphous carbon particles comprising an easy-graphitizable amorphous carbon containing silicon oxide particles having a chemical formula represented by $SiO_x$ (0<x<2), which silicon-containing amorphous carbon particles are spherical particles comprising a core particle present at the center portion and a shell layer formed on the outside of core particle, in which voids are present not only between said core particle and said shell layer but also in the shell layer.

In a second aspect of the present invention, there is provided a producing method of silicon-containing amorphous carbon particles as defined in the first aspect comprising:

- a step of dry granulation comprising mixing

    -- a carbon material,
    -- silicon particles or silicon oxide particles, and
    -- a void forming agent, and

- a step of carbonization of the obtained granulated particles under an inert gas atmosphere.

In a third aspect of the present invention, there is provided a lithium ion secondary battery comprising a negative electrode comprising silicon-containing amorphous carbon particles as defined in the first aspect.

ADVANTAGEOUS EFFECTS OF INVENTION

According to the silicon-containing amorphous carbon particles of the present invention, it can be attained to obtain a secondary battery having an excellent capacity retention rate without reducing the initial discharge capacity and initial efficiency.

BRIEF DESCRIPTION OF DRAWINGS

[Fig. 1] Fig. 1 is a conceptual diagram of silicon-containing amorphous carbon particles according to the present invention.
[Fig. 2] Fig. 2 is a microscope photograph of amorphous carbon particles according to Example 3.
[Fig. 3] Fig. 3 is a microscope photograph of a cross-section of amorphous carbon particles according to Example 3.
[Fig. 4] Fig. 4 is a microscope photograph of a cross-section of amorphous carbon particles according to Example 3 (magnified view).
[Fig. 5] Fig. 5 is a microscope photograph of a cross-section of amorphous carbon particles according to Comparative Example 1.

DESCRIPTION OF EMBODIMENTS

The present invention is hereinafter described in detail. It should be noted that the following description is merely one example of embodiments, and the described components materials, shape of components and members, conditions of processing and heat treatment, etc. may be varied as appropriate without departing from the scope of the present invention.

<Description of silicon-containing amorphous carbon particles>

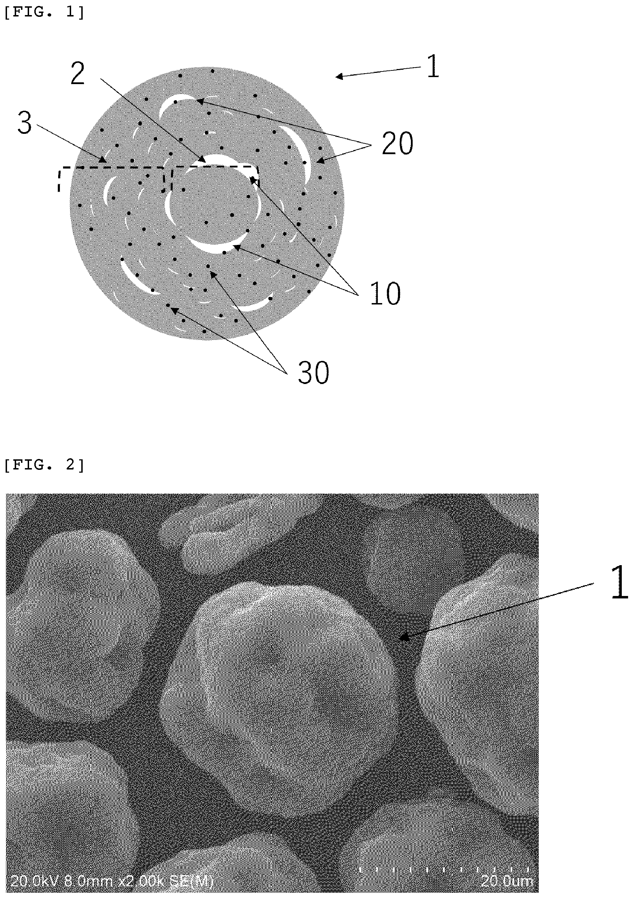

Fig. 1 shows a conceptual diagram of the structure of silicon-containing amorphous carbon particles according to the present invention. Hereinafter, the structure of silicon-containing amorphous carbon particles according to the present invention will be described by use of Fig. 1. It should be noted that Fig. 1 is merely a conceptual diagram so as to easily understand the configuration of the silicon-containing amorphous carbon particles according to the present invention, and it is not intended to limit the shape and size described in Fig. 1.

The silicon-containing amorphous carbon particles (1) in the present invention comprise an amorphous carbon. In the amorphous carbon, silicon oxide particles (30) whose chemical formula is $SiO_x$ (0<x<2) are contained. The silicon oxide particles contained in the said amorphous carbon are present, for example as a dispersed form. The amorphous carbon is a so-called soft carbon such as an easy-graphitizing carbon. Respective silicon-containing amorphous carbon particles are constructed by multiple carbon particles derived from the material.

By forming this construction, that is, containing the silicon oxide particles in the amorphous carbon, it is possible to improve an initial discharged capacity when using the silicon-containing amorphous carbon particles as a negative electrode material of lithium ion secondary battery.

The silicon-containing amorphous carbon particles in the present invention are spherical particles. These spherical particles comprise a core particle (2) present at the center portion of particle and a shell layer (3) formed on the outside of the said core particle. The core particle comprises an amorphous carbon as a main component (80 wt% or more of amorphous carbon). The shell layer comprises an amorphous carbon containing silicon oxide particles. Further, voids (10) are present between said core particle and said shell layer, as well as voids (20) are present in the shell layer. By this structure, it is possible to suppress a volume change when generating occlusion and release of lithium.

In the silicon-containing amorphous carbon particles according to the present invention, the voids (10) present between the core particle and the shell layer preferably have a crescent shape and a length of long axis direction of 1 to 10 $\mu$m. By the presence of voids between the core particle and the shell layer, it is possible to maintain the particle shape because an expansion of $SiO_x$ during Li occlusion can be relaxed. The length of short axis direction thereof is preferably 0.1 to 1 $\mu$m. In the silicon-containing amorphous carbon particles according to the present invention, the voids present in the shell layer preferably has a length of long axis direction of 0.01 to 8 $\mu$m. By the presence of voids in the shell layer, it is possible to maintain a particle shape because an expansion of $SiO_x$ during Li occlusion can be relaxed. Further, the length of short axis direction is preferably 0.01 to 0.5 $\mu$m.

In the silicon-containing amorphous carbon particles according to the present invention, the number of voids having a length of long axis direction of 1 $\mu$m or more is preferably 20 or more, more preferably 20 to 50 based on one sphere particle. Further, the number of voids having a length of long axis direction of 1 $\mu$m or less is preferably 100 or more, more preferably 500 to 1000 based on one sphere particle.

The number of voids present between said core particle and said shell layer is preferably 1 or more, more preferably 5 to 10 based on one sphere particle. The number of voids present in the shell layer is preferably 120 or more, more preferably 500 to 1000 based on one sphere particle.

Further, in the silicon-containing amorphous carbon particles according to the present invention, if the oxygen molar ratio $x(SiO_x)$ to silicone is not less than 0.2 and less than 2.0, the initial discharge capacity can be increased and it is possible to provide a cycle performance with a certain level or more as well as a proper balance, therefore this is more preferable. It is more preferable that the oxygen molar ratio $x(SiO_x)$ to silicone is 0.3 to 1.7.

The average particle size of the said silicon-containing amorphous carbon particles (D50) is preferably 5 to 40 $\mu$m. When the average particle size exceeds 40 $\mu$m, the strength of carbon particles is reduced and it may be difficult to form an electrode having a suitable film thickness. Carbon particles having an average particle size of less than 5 $\mu$m, it is difficult to disperse silicon oxide particles in the amorphous carbon particles. The average particle size of silicon-containing amorphous carbon particles is more preferably 10 to 30 $\mu$m. The maximum particle size of silicon-containing amorphous carbon particles is about 45 $\mu$m or less.

The silicon content in the silicon-containing amorphous carbon particles is preferably not less than 1 wt% and not more than 50 wt%. When the content is 50 wt% or less, it is easy to granulate the particles. In order to attain a sufficient performance of improving a battery capacity, the silicon content is preferably 5 wt% or more. The silicon content in the silicon-containing amorphous carbon particles is more preferably 2 to 40 wt%. The carbon content in the silicon-containing amorphous carbon particles is preferably 50 to 99 wt%. When the carbon content is less than 50 wt%, it may be difficult to granulate the particles. The carbon content is more preferably 52 wt% or more.

The degree of circularity of silicon-containing amorphous carbon particles according to the present invention is preferably 0.60 to 1.0, more preferably 0.70 to 0.98. Here, the "degree of circularity" used in the present invention is an indicator of roundness of particle or like and is determined by the following formula (1).

$$\text{(Degree of circularity)} = \{4 \times \pi \times \text{(projection area)}\} /$$

$$\{\text{(boundary length)} \times 2\} \cdots (1)$$

By having the above degree of circularity, the packing density and electrode density can be increased. When the degree of circularity is less than 0.60, the effect of compounding is not attained sufficiently and the packing density and electrode density are lowered by catching particles together. The degree of circularity does not exceed 1.0. When the degree of circularity is 1.0, the technical effect according to the present invention can be attained. However, in view of improving the packing density and increasing the contacts between the particles, the degree of circularity is preferably 0.98 or less. It is noted that even if the degree of circularity of silicon-containing amorphous carbon particles is out of the aforementioned range, it is possible to use them as a negative electrode material for a lithium ion secondary battery because of having a technical effect where the volume change during charging and discharging can be more reduced than that of conventional carbon materials.

The BET specific surface area of the silicon-containing amorphous carbon particles of the present invention is preferably 0.3 to 10 $m^2/g$, more preferably 0.3 to 2.0 $m^2/g$. When the BET specific surface area is within the above range, the activity of the particle surface can be reduced, and it is preferable to reduce any side reaction during charging and discharging when used for a secondary battery.

The amorphous carbon contained in the silicon-containing amorphous carbon particles produced by using a raw coke preferably contains 700 to 2500 ppm of transition metal(s).

As described above, by containing thus in the transition metal in the amorphous carbon, an effect of promoting the insertion and desorption of lithium can be attained. Further, by doping the transition metal in the silicon oxide, the expansion and contraction of silicon oxide particle can be reduced. The content of transition metal is more preferably 1000 to 1500 ppm.

Since the above described silicon-containing amorphous carbon particles of the present invention have such a structure that silicon oxide particles are dispersed in a high amount in the amorphous carbon, the initial charge capacity and the initial discharge capacity can be increased as compared with a case only consisting of amorphous carbon.

As a silicon source, silicon oxide particles or silicon particles as described hereinafter are used. In the respective cases, the above described silicon-containing amorphous carbon particles can be produced by mixing the materials with a suitable compounding ratio.

Further, since the carbon portions in the inside of spherical particles have no grain boundary by heat-fusing of respective particles each other in the calcining step, it is possible to sufficiently ensure the diffusion path of lithium, so that it is also possible to quickly perform the insertion and desorption of lithium.

Still further, in the silicon-containing amorphous carbon particles according to the present invention, since the storage and release of lithium ion are performed in the isotropic direction at the amorphous carbon portions, it is possible to charge and discharge more quickly as compared with a case using a graphite. The containing silicon oxide also provides a high capacity. Therefore, the silicon-containing amorphous carbon particles according to the present invention are especially preferably used in lithium ion secondary batteries or the like for electric vehicles.

Further, since the storage and release of lithium ions are performed in the isotropic direction, the volume change per one direction becomes small so that the destruction of the negative electrode is less likely to occur as compared with the case where a graphite material having high crystallinity is used.

The silicon-containing amorphous carbon particles according to the present invention can be used for not only a lithium ion secondary battery, but also a negative electrode material of lithium ion capacitor.

<Producing method of silicon-containing amorphous carbon particles (negative electrode material)>

Next, the producing method of silicon-containing amorphous carbon particles (negative electrode material) according to the second aspect of present invention is described. The production method of silicon-containing amorphous carbon particles according to the present invention comprises a step of dry granulation comprising mixing a carbon material, and silicon particles or silicon oxide particles, and a void forming agent; and a step of carbonization of the obtained granulated particles under an inert gas atmosphere.

[Void forming agent]

In the present invention, suitable voids can be formed in the carbon material by producing the carbon material using the void forming agent. As the void forming agent, there can be used at least one selected from the group consisting of (1) a polysaccharide having an exothermic peak of not lower than 300°C at the thermal decomposition or (2) a mineral oil whose fixed carbon content at a 1000°C calcination is not more than 10%.

As the polysaccharide (1), crystalline celluloses are preferable. Crystalline celluloses are not changed until a temperature of about 300°C when rising and rapidly decomposed at a temperature of 300 to 350°C. By this rapidly decomposition, a volatile gas is rapidly generated so that a high pressure gas is temporarily retained in the inside of particle and the void forming performance can be enhanced.

As the mineral oil (2), there are exemplified coal tars, ethylene bottom oils, and paraffin-based and naphthene-based mineral oils.

The amount of added void forming agent is preferably 10 to 50 wt% to the total amount of carbon material, and silicon particles or silicon oxide particles. When the amount of added void forming agent is less than 10 wt%, it may be difficult to form the desired voids. When the amount of added void forming agent is more than 50 wt%, it is not preferable that a sufficient sphere shape may not be attained in the granulation step and the particle strength is not sufficient after the calcination. The amount of added void forming agent is more preferably 15 to 45 wt%.

[Carbon material]

The carbon material of silicon-containing amorphous carbon particles according to the present invention can be produced from a raw coke such as a needle (acicular) coke or mosaic (non-acicular) coke as a material. The raw coke is for example obtained by thermally decomposing and polycondensing a heavy oil at about 300°C to 700°C using a coking equipment such as a delayed coker.

For example, there can be used a petroleum-based row coke which has an optically isotropic tissue uniformly dispersed therein in a cross-section observed by a polarization microscope, the optically isotropic tissue rate of 75% or more, more preferably 85% or more, and a total transition metal content of 700 ppm or more and 2500 ppm or less. This raw coke is considered to improve the efficiency of Li insertion and desorption when used as a negative electrode material for a lithium ion secondary battery because it contains a large amount of transition metals or the like as impurities.

In addition, the carbon material used in the present invention has a volatile component (calcining at 1000°C) of 10 to 45 wt%. It is preferred to improve the reduction effect of silicon oxide by the content of the volatile component being within said range. The content of the volatile components is more preferably 15 to 38%.

The impurity content (ash content) of carbon material used in the present invention is preferably 0.5 to 2 wt%. By containing the impurity within the above content range, in case of using it as a negative electrode material of lithium ion secondary battery, it is preferable to improve the efficiency of Li insertion desorption. The content of impurities is more preferably 0.5 to 1.0 wt%.

Then, the petroleum-based raw coke is pulverized with a mechanical pulverizer such as Super Rotor Mill (manufactured by Nisshin Engineering Inc.), Jet Mill

(manufactured by Nippon Pneumatic Mfg. Co., Ltd.), or the like

The average particle diameter (D50) after pulverization is 1 $\mu$m or more and 15 $\mu$m or less, more preferably 3 $\mu$m or more and 10 $\mu$m or less. The average particle size is based on measurements by a laser diffraction particle size distribution meter. If D50 is less than 1 $\mu$m, the required pulverization energy becomes too large and this is impractical. If D50 is less than 3 $\mu$m, then it may not be possible to provide a sufficient mechanical energy to the particles when performing a dry granulation process. Also, when D50 exceeds 15 $\mu$m, the amount of particles having a suitable size for a negative electrode material of the lithium ion secondary battery is reduced and therefore this is not preferable.

The pulverized product may be further classified. As classification devices, there are exemplified precision air classifiers such as Turbo Classifier (manufactured by Nisshin Engineering Inc.), Elbow Jet (manufactured by Nittetsu Mining Co. Ltd.), Classier (manufactured by Seishin Enterprise Co., Ltd.), or the like.

[Silicon raw material]

As the silicon raw material, silicon oxide particles or silicon particles are used. Here, the average particle size of the silicon raw material is not particularly limited. However, by selecting the size of 1 $\mu$m or less, the expansion degree of silicon oxide particles during charging and discharging of the silicon-containing amorphous carbon particles becomes small, so that the carbon layer can control the volume change.

(1) In case of using silicon oxide particle:

Here, a case where silicon oxide particles having an average particle size of about 20 to 30 nm are used is described as an example. Since the preferred embodiment differs depending on the respective types of silicon raw materials, the case of using silicon particles will be described later.

(Dry granulation step)

First, the carbon material and the silicon oxide particles are mixed well to conduct the dry granulation. The mixing ratio of the carbon raw material and the silicon raw material is particularly not limited, but the ratio of the silicon oxide particles is preferably 1 to 50 wt% based on the total weights of the carbon raw material and the silicon oxide particles (total: 100 wt%). The percentage of silicon oxide particle is more preferably 10 to 50 wt%, still more preferably 30 to 50 wt%.

In the present treatment, there can be used equipments capable of simultaneously applying stresses such as shear, compression and collisions, but the processing equipment is not limited to these equipment having such structures and principles.

As the equipment used for the present treatment, there are exemplified ball-type kneaders such as a rotation-type ball mill, wheel-type kneaders such as an edge runner, Hyblidization System (manufactured by NARA MACHINERY CO., LTD.), MECHANO FUSION (manufactured by HOSOKAWA MICRON CORPORATION), NOBILTA (manufactured by HOSOKAWA MICRON CORPORATION), COMPOSI (NIPPON COKE & ENGINEERING CO., LTD.) or the like. In particular, an equipment having such a structure that compaction stress or compressive stress in the gap between a blade of rotating blade and housing is applied to the particles, is preferably used. When the temperature applied to the powder during the treatment is controlled to 60 to 300°C, suitable tackiness is generated by volatile matters contained in the raw coke so that an action of quick attaching the particles to each other occurs thereby promoting a growth of particles.

By controlling the degree of circularity of the carbon material used for the material, it is possible to control the degree of circularity of particles obtained after the shape processing by the compressive shear stress. When the degree of circularity of carbon material used for the material is about 0.5 to 0.8, the degree of circularity of particles obtained after the shape processing by the compressive shear stress can be controlled as more than 0.60 and not more than 1.0. The degree of circularity of particles obtained is preferably 0.65 to 0.98. Although the degree of circularity of particles is 1.0, it is also possible to attain the relaxation effect of expansion and contraction of silicon oxide particle. However, when particles are treated so as to have a degree of circularity of more than 0.98, the particle shape is almost true sphere so that the contact of particles each other is reduced. The range of degree of circularity of particles is especially preferably 0.80 to 0.96.

Further, in the present invention, it is not required to use an equipment having an ability of spheronization treatment. For example, a molded product can be produced by a method comprising mixing the pulverized carbon material and silicon oxide particle with good dispersibility, forming a molded product having a prescribed shape by an oil hydraulic press, calcining the obtained molded product and pulverizing the calcining product by a pulverizer. As the pulverizer, there are exemplified a bead mill (MSC mill manufactured by NIPPON COKE & ENGINEERING CO., LTD.), Jet Mill (manufactured by Nippon Pneumatic Mfg. Co., Ltd.), or the like.

When the silicon oxide particles and the carbon raw material are mixed, the total amount of the silicon oxide particles may be mixed with the carbon raw material. However, when the amount of the silicon oxide particles is large, it may become difficult to granulate, so that the silicon oxide particles may be added multiple times (for example, three or more times) after starting the granulation by mixing the carbon raw material and a portion of silicon oxide particles. Further, silicon oxide particles and carbon raw materials may also be added after the silicon oxide particles and the like are charged at the start of granulation. Still further, only the carbon raw material may be added to the end of the granulation to coat the surface of the silicon oxide particles with the carbon raw material. Also, in this step, a portion of the silicon oxide may be replaced by elemental silicon.

In addition, it is also possible to composite a heterogeneous material with the raw coke by replacing a portion of the raw coke used for granulation with carbon materials such as an acetylene black, inorganic compounds including a transition metal compound, organic compounds, or the like. If there is no adverse effect for conducting the granulation, some of the raw coke charged at the start of granulation or during granulation may be replaced with the heterogeneous material, or only the heterogeneous material may be added during granulation. The amount of heterogeneous material added is not particularly limited within a range providing no adverse effect for the granulation. The average particle size of the heterogeneous material is not particularly limited within a range providing no adverse effect for the granulation, but the size is preferably less than or equal to 1/2 of the granulated particle size at the time of addition.

(Carbonization step)

Next, the granulated particles are carbonized. The carbonization method is not limited but for example, there is mentioned a heat treatment method conducted under an inert gas atmosphere such as nitrogen, argon or the like at a maximum temperature reached of 800 to 1200°C for a retention time of more than 0 hour and not more than 10 hours at such maximum temperature reached.

When the carbonization temperature is 800°C or more, the amount of low molecular hydrocarbons and functional groups remained in the row coke can be reduced, so that an increase of irreversible capacity by such impurities can be effectively controlled. When the carbonization temperature is 1200°C or less, it is preferred that a generation of silicon carbide having an insulation property in the materials can be controlled. The carbonization temperature is especially preferably 900 to 1100°C. When the carbonization temperature is 900°C or more, the increase of irreversible capacity by such remained low molecular hydrocarbons can be more effectively controlled.

In the carbonization step, it may be possible that the retention time at such maximum temperature reached is more than 10 hours. However, it may not be cost effective because of continuing the heat treatment after completing the carbonization.

It is considered that by this carbonization treatment, volatile components in the raw coke promote the reduction of silicon oxide. In addition, gas discharge paths are formed in the particle when the gasses of volatile components are removed during the carbonization. The said gas discharge paths also become diffusion paths of lithium when used as a negative electrode material of lithium ion secondary battery, so that the expansion and contraction of silicon oxide particle can be effectively relaxed.

According to the above method, the material used for a negative electrode of lithium ion secondary battery can be produced more easily than the method described in Patent Literature 1.

(2) In case of using silicon particles:

As another example, a case using silicon particles instead of silicon oxide particle is described.
It should be noted that silicon particles are susceptible to formation of oxide layer on the surface of the particle by treating in air, and an oxide layer may be previously formed on the surface of the silicon particle to prevent excessive oxidation of the silicon particle, but these silicon particles may also be used in the present invention.

(Dry granulation step)

First, the raw coke and silicon particles are mixed sufficiently to conduct dry granulation. The mixing ratio of carbon material and silicon material is not particularly limited, but the percentage of silicon particles is preferably 2 to 90 wt% based on the total weight of the raw coke and silicon particles (total 100%). Especially, since silicon particles having a low oxidation number greatly expand and contract, the percentage of silicon particles is preferably 5 to 50 wt%, more preferably 5 to 35 wt%.
In the present treatment, there can be used an equipment capable of simultaneously applying stresses such as shear, compression and collisions, similar to those described above.
By controlling the degree of circularity of the raw coke used for the material, it is possible to control the degree of circularity of particles obtained after the shape processing by the compressive shear stress. When the degree of circularity of raw coke used for the material is about 0.5 to 0.8, the degree of circularity of particles obtained after the shape processing by the compressive shear stress can be controlled as more than 0.60 and not more than 1.0. The degree of circularity of particles obtained is preferably 0.65 to 0.98. Although the degree of circularity of particles is 1.0, it is also possible to attain the relaxation effect of expansion and contraction of silicon oxide particle. However, when particles are treated so as to have a degree of circularity of more than 0.98, the particle shape is almost true sphere so that the contact of particles each other is reduced. The range of degree of circularity of particles is especially preferably 0.80 to 0.96.
When the silicon particles and the carbon raw material are mixed, the total amount of the silicon particles may be mixed with the carbon raw material. However, when the amount of the silicon particles is large, it may become difficult to granulate, so that the silicon particles may be added multiple times (for example, three or more times) after starting the granulation by mixing the carbon raw material and a portion of silicon particles. Further, silicon particles and carbon raw materials may also be added after the silicon particles and the like are charged at the start of granulation. Still further, only the carbon raw material may be added to the end of the granulation to coat the surface of the silicon particles with the carbon raw material. Also, in this step, a portion of the silicon may be replaced by silicon oxide.
In addition, it is also possible to composite a heterogeneous material with the raw coke by replacing a portion of the raw coke used for granulation with carbon materials such as an acetylene black, inorganic compounds including a transition metal compound, organic compounds, or the like. If there is no adverse effect for conducting the granulation, some of the raw coke charged at the start of granulation or during granulation may be replaced with the heterogeneous material, or only the heterogeneous material may be added during granulation. The amount of heterogeneous material added is not particularly limited within a range providing no adverse effect for the granulation. The average particle size of the heterogeneous material is not particularly limited within a range providing no adverse effect for the granulation, but the size is preferably less than or equal to 1/2 of the granulated particle size at the time of addition.

(Carbonization step)

Next, the granulated particles are carbonized. The carbonization method is not limited but for example, there is mentioned a heat treatment method conducted under an inert gas atmosphere such as nitrogen, argon or the like at a maximum temperature reached of 800 to 1200°C for a retention time of more than 0 hour and not more than 10 hours at such maximum temperature reached.
When the carbonization temperature is 800°C or more, the amount of low molecular hydrocarbons and functional groups remained in the row coke can be reduced, so that an increase of irreversible capacity by such impurities can be effectively controlled. When the carbonization temperature is 1200°C or less, it is preferred that a generation of silicon carbide having an insulation property in the materials can be controlled.
The carbonization temperature is especially preferably 900 to 1100°C. When the carbonization temperature is 900°C or more, the increase of irreversible capacity by such remained low molecular hydrocarbons can be more effectively controlled.
In the carbonization step, it may be possible that the retention time at such maximum temperature reached is more than 10 hours. However, it may not be cost effective because of continuing the heat treatment after completing the carbonization.

It is considered that this carbonization treatment has an effect where volatile components in the raw coke act to reduce the oxide layer on the surface of silicon particle. The carbon material containing silicon particles having a small oxidation number is preferred as negative electrode materials because of exhibiting a high capacity, while silicon particles with a small oxidation number have a problem of greater expansion and contraction. According to the present invention, the voids formed by removing the volatile component gas generated during carbonization to the outside thereof relax the expansion and contraction of the silicon particles, so that high capacity silicon-containing amorphous carbon particles can be provided. Further, gas discharge paths are formed in the particle when the gasses of volatile components are removed during the carbonization. The said gas discharge paths also become diffusion paths of lithium when used as a negative electrode material of lithium ion secondary battery.

According to the above method, the material used for a negative electrode of lithium ion secondary battery can be also easily produced.

Further, in the producing method of the present invention, the size of the unevenness of surface of granulated particles can be adjusted. Concretely, in the granulation step, the surface irregularities can be increased by shortening the granulation time, decreasing the pressure during granulation, increasing the blending ratio of silicon oxide, or adding raw coke particles having a larger particle size than the raw coke particles added during granulation. Conversely, the surface irregularities may be reduced by adding raw coke particles having a smaller particle size than the raw coke particles added at the beginning of the granulation during granulation

<Constitution of lithium ion secondary battery>

The lithium ion secondary battery of the present invention comprises a negative electrode, a negative electrode current collector, a positive electrode, a positive electrode current collector, a separator placed between the negative electrode and the positive electrode and an outer package comprising an aluminum laminate film or the like.

As the negative electrode, there is used for example, a product where the amorphous carbon-containing material according to the present invention is coated on one or both sides of the metal foil. The average particle size and degree of circularity of the coated silicon-containing amorphous carbon particles are not substantially changed before and after the producing process of the battery, and are 5 to 40 $\mu$m and 0.60 to 1.0, respectively.

In the production of negative electrode, in addition to the granulated silicon-containing amorphous carbon particles, a conductive assistant agent such as an acetylene black (AB manufactured by Denka Corporation) and a carbon-nanofiber (VGCF-H manufactured by Showa Denko), KF polymer (polyvinylidenefluoride (PVdF) manufactured by Kureha Chemical Industry Co., Ltd.), and N-methylpyrrolidone (NMP) as a solvent are added and kneeded by a rotation and revolution-type mixer (manufactured by Thinky Corporation. Then, the obtained paste is applied onto a current collecting copper foil.

In addition, the shapes and constituent materials of members other than the negative electrode, such as a negative electrode current collector, a positive electrode, a positive electrode current collector, a separator and an outer package, can be applied.

Since the lithium ion secondary battery according to the present invention has the negative electrode coated with the silicon-containing amorphous carbon particles described above, quick charging and discharging are possible, the capacity is large, and the negative electrode is less likely to damage even when charging and discharging are repeated. Furthermore, energy density thereof is high, irreversible capacity is reduced and cycle characteristics can also be improved.

It should be noted that the above description is merely one example of a lithium ion secondary battery. So, the above example can be suitably modified by such as an electrode number, size, etc.

Examples

The present invention will be more specifically described below in accordance with the Examples and Comparative Examples, but the invention is not limited to the following examples.

(a) Measurement of volatile component, ash content in the carbon material:
An electric furnace was used to determine the weight change before and after calcining at 1000°C for 5 hours in an inert gas atmosphere to quantitatively analyze the volatile components in the carbon material. Also, using an electric furnace, a weight change before and after calcining when calcined at 1000°C for 5 hours in an atmospheric atmosphere was confirmed and a quantitative analysis of ash was performed.

(b) Measurement of average particle size (D50):
The average particle size (D50) was measured by an equipment of laser diffraction scattering particle size distribution measurement LMS-2000e manufactured by Marvern Panalytical Ltd.

(c) Measurement of BET specific surface area:

The BET specific surface area was measured by use of Multisorb (manufactured by Marvern Panalytical Ltd.).

(d) Measuring the carbon content of amorphous carbon particles:

The carbon content in the sample was quantitatively analyzed by a carbon-sulfur analyzer (EMIA-U520 manufactured by HORIBA Ltd.) based on a calcining-infrared absorption method.

(e) Measurement of oxygen content of amorphous carbon particles:

The oxygen content in the sample was quantitatively analyzed by an inert gas fusion infrared absorption method using an oxygen-nitrogen analyzer (EMGA-920 manufactured by HORIBA Ltd.)

(f) Measuring the silicon content of amorphous carbon particles:

The sample was ashed at 1050°C and the residual amount was calculated as the silicon dioxide content. The O/Si ratio is determined based on the molar concentration in the sample respectively obtained from the oxygen content ratio and the silicon content ratio.

(g) Measurement of degree of circularity:

A photograph of scanning electron microscope (S-4800 manufactured by Hitachi High-Tech Corporation) of the sheet was taken in such a manner that the particles are not laminated and the flat particles are arranged parallel to the sheet and dispersed-fixed, and the obtained image was analyzed by a software of A-Zou-Kun (manufactured by Asahi Kasei Engineering Corporation). In the present Examples and the Comparative Examples, the projected area and the projected ambient length are measured for 300 particles, respectively and the degree of circularity was calculated to determine the average value of degree of circularity.

(h) Measurement of true density:

About 1.5g of specimen was placed into a 10 ml-picnometer (Wa) and the total weight of specimen and picnometer (Wb) was weighed to four places of decimals. 4 mL of n-butanol was added into the picnometer and it was subjected to ultrasonic treatment for 5 minutes in a bath therefor.

Further, n-butanol was added to the graduation marking of picnometer and the picnometer was leaved to stand for 5 minutes in a constant-temperature bath at 25°C. Thereafter, a stopper was fitted and the weight of picnometer was measured (Wc).

The true density was calculated by use of the following formula.

$$\text{True density} = (Wb-Wa)/(Wb-Wa-Wc+Wd) \times \text{Density of n-butanol } (25°C)$$

Wa: Weight of pycnometer
Wb: Weight of (pycnometer + specimen)
Wc: Weight of (pycnometer + specimen + n-butanol to the graduation marking)
Wd: Weight of (pycnometer + n-butanol to the graduation marking)

(i) Measurement of void percentage:

1) Respective true densities of 1) calcining product of raw coke at 1000°C, 2) nano-Si particles and 3) nano-$SiO_2$ particles were measured.

2) Total of (True densities of respective materials) X (Composition percentage (%) of respective materials to be compounded and granulated) is defined as a theoretical true density ($\rho a$). Further, an actual measured true density of the compounded and granulated specimen was measured ($\rho b$).

3) A ratio of (theoretical value of true density of respective materials to be compounded and granulated) to (actual measured true density of the compounded and granulated specimen) (X) was determined.

$$\rho b/\rho a \quad \cdots \quad X$$

4) In case where a theoretical volume of the compounded and granulated material is defined as "1", a void ratio (Y) of the compounded and granulated specimen was determined.

$$X-1 \quad \cdots \quad Y$$

5) The void percentage (Z) of the compounded and granulated specimen was determined by the following formula.

$$(Y/X) \ X \ 100(\%) \quad \cdots \ Z \ (void \ percentage)$$

(j) Cross-sectional observation of particles:
The particles were buried in a resin and the buried particles were treated by a cross section polisher (CP). The cross-sectional photograph of thus prepared particles was taken with a scanning electron microscope (S-4800 manufactured by Hitachi High-Tech Corporation).
(k) Battery fabrication and evaluation testing for half-cell evaluation:
The battery evaluation using a single electrode was performed by use of a CR2032 coin cell.

Preparation of Paste for Fabricating Electrode Sheets:

To one part by weight of the sample, 0.039 parts by weight of acetylene black (AB), 0.13 parts by weight of carbon nanofiber (VGCF-H), 0.13 parts by weight of 8 wt% KF polymer (polyvinylidene fluoride (PVdF) manufactured by Kureha Chemical Industry Co., Ltd) and N-methylpyrrolidone (NMP) as a solvent were added and kneeded by use of a rotation and revolution-type mixer (manufactured by Thinky Corporation). After kneading, the kneeded product was applied to a Cu metal foil and dried. The obtained sheet was rolled and punched into a predetermined size to prepare an electrode for the evaluation. As a counter electrode, a lithium metal was used. As an electrolyte, a mixed solution of ethylene carbonate (EC) dissolving 1 mol/L $LiPF_6$ and dimethyl carbonate (DMC) (1:2 in volume ratio) was used. The following coin cell assembly was performed in a dry argon atmosphere having a dew point of -80°C or less.

Single Electrode Charge/Discharge Test:

Charging was performed by constant current charging at 1.5 mA to 0.05 V and the charging was complete when the current was attenuated to 0.04 mA. The (CC-CV charge) discharge was performed by constant current discharge (CC discharge) at 1.5 mA and cut off at 2.0 V. This charge/discharge performance was repeated for 10 cycles.

<Preparation of silicon-containing amorphous carbon particles in the following Examples and Comparative Examples>

In the following Examples and Comparative Examples, as the carbon material, a raw coke which is a petroleum-based non-acicular type coke was used.
As the silicon material, a silicon dioxide obtained by precipitation method (NpsilLP, NipsilHD (manufactured by TOSOH SILICA CORPORATION) was used.
As the void forming agent, a crystalline cellulose agent (CEOLUS TG-F20 (manufactured by Asahi Kasei Corp.), ethylene bottom oil (EBO (Maruzen Petrochemical Co., Ltd.) or the like were used.

Example 1:

A raw coke was ground and classified so that D50 is 5.2 μm. The obtained raw coke, silicon dioxide particles and an ethylene bottom oil as the void forming agent were mixed to conduct dry granulation thereof. The primary particle size of silicon dioxide particles was 20 to 30 nm. The amount of silicon dioxide particles added was 50 wt% when the total weight of silicon dioxide particles and raw coke is 100 wt%. The amount of ethylene bottom oil to be added as the void forming agent is 10 wt% when the total weight of the silicon dioxide particles and the raw coke is 100 wt%.
The raw coke, a portion of silicon dioxide particles and a portion of ethylene bottom oil as the void forming agent were charged into COMPOSI CP 15-type (manufactured by NIPPON COKE & ENGINEERING CO., LTD.) to start the spheronization treatment at a low speed, and the total amount of the silicon dioxide particles and the ethylene bottom oil was charged several times. After charging the total amount of materials, the mixture was treated at a circumferential speed of 70 m/s for 420 minutes to obtain granulated particles.
The granulated particles were then carbonized at 1000°C for the retention time (carbonization time) of 5 hours at the maximum temperature reached.
The D50 of spheronized composite material thus obtained in Example 1 was 17.5 μm, the BET specific surface area thereof was 0.4 m2/g and the degree of circularity thereof was 0.72. Further, O/Si ratio (molar ratio) was 1.08. The Si content of the obtained material was 28 wt%.

Examples 2 to 6 and Comparative Examples 1 to 3:

The same procedure according to Example 1 was conducted to obtain silicon-containing amorphous carbon particles except that the type and added amount of silicon oxide particles or silicon particles, the type and added amount of the void forming agent, the conditions of spheronization treatment and the conditions of carbonization treatment were varied.

The properties of the carbon material are shown in Table 1, the properties of the silicon material are shown in Table 2 and the properties of the voids are shown in Table 3.

Further, the production conditions thereof are shown in Table 4 and the properties of obtained silicon-containing amorphous carbon particles are shown in Table 5.

Table 1

| Type of carbon material | Primary particle size ($\mu$m) | Volatile components (Calcined at 1000°C) (%) | Content of impurity atoms (%) |
|---|---|---|---|
| Row coke | 5.2 | 12 | 1.25 |

Table 2

| Type | Primary particle size (nm) | Secondary particle size ($\mu$m) | BET ($m^2$/g) |
|---|---|---|---|
| Si | 200 | 7 | 1.9 |
| $SiO_2$ A | 11 | 5 | 194 |
| $SiO_2$ B | 15 | 9.8 | 276 |

Table 3

| Type of void forming agent | Primary particle size ($\mu$m) | Thermal decomposition starting temperature (°C) | Exothermic peak temperature (°C) | Fixed carbon content (1000°C/$N_2$ atmosphere |
|---|---|---|---|---|
| Cellulose | 8.5 | 247 | 337 | 8.3 |
| Ethylene bottom oil (EBO) | - | 300 (boiling point) | - | 11.2 |

Table 4

| | Material composition | | | | Void forming agent | |
|---|---|---|---|---|---|---|
| | Row coke (wt%) | Si (wt%) | SiO₂ | | Type (wt%) | Ratio of void forming agent to the materials (wt%) |
| | | | Type | (wt%) | | |
| Example 1 | 50 | - | A | 50 | EBO | 10 |
| Example 2 | 50 | - | A | 50 | Cellulose A | 20 |
| Example 3 | 50 | - | A | 50 | Cellulose A | 40 |
| Example 4 | 50 | 10 | B | 40 | Cellulose A | 20 |

(continued)

| | Material composition | | | | Void forming agent | |
|---|---|---|---|---|---|---|
| | Row coke (wt%) | Si (wt%) | SiO$_2$ | | Type (wt%) | Ratio of void forming agent to the materials (wt%) |
| | | | Type | (wt%) | | |
| Example 5 | 50 | 20 | B | 30 | Cellulose A | 20 |
| Example 6 | 90 | 10 | - | - | Cellulose A | 40 |
| Comp. Example 1 | 50 | - | A | 50 | - | 0 |
| Comp. Example 2 | 50 | 10 | B | 40 | - | 0 |
| Comp. Example 3 | 90 | 10 | - | - | - | 0 |

| | Spheronization treatment | | Carbonization treatment | | |
|---|---|---|---|---|---|
| | Circumferential speed (m/s) | Time (min) | Temperature rising rate (°C/hr) | Temperature (°C) | Time (hr) |
| Example 1 | 70 | 420 | 200 | 1000 | 5 |
| Example 2 | 70 | 200 | 50 | 1000 | 0 |
| Example 3 | 70 | 410 | 50 | 1000 | 0 |
| Example 4 | 70 | 300 | 10 | 1000 | 0 |
| Example 5 | 70 | 550 | 10 | 1000 | 0 |
| Example 6 | 70 | 510 | 200 | 1000 | 5 |
| Comp. Example 1 | 70 | 200 | 50 | 1000 | 5 |
| Comp. Example 2 | 70 | 200 | 200 | 1000 | 5 |
| Comp. Example 3 | 70 | 200 | 200 | 1000 | 5 |

Table 5

| | D50 ($\mu$m) | BET (m$^2$/g) | Degree of circularity | C (wt%) | O (wt%) | Si (wt%) |
|---|---|---|---|---|---|---|
| Example 1 | 17.5 | 0.4 | 0.72 | 54 | 18 | 28 |

(continued)

|  | D50 ($\mu$m) | BET (m²/g) | Degree of circularity | C (wt%) | O (wt%) | Si (wt%) |
|---|---|---|---|---|---|---|
| Example 2 | 40.4 | 10 | 0.77 | 55 | 20 | 25 |
| Example 3 | 27.7 | 4.9 | 0.76 | 58 | 20 | 22 |
| Example 4 | 16.8 | 0.9 | 0.62 | 55 | 19 | 27 |
| Example 5 | 31.2 | 1.1 | 0.70 | 52 | 18 | 30 |
| Example 6 | 30.8 | 0.3 | 0.75 | 89 | 3 | 8 |
| Comp. Example 1 | 26.0 | 7.8 | 0.68 | 53 | 20 | 27 |
| Comp. Example 2 | 14.1 | 0.6 | 0.68 | 52 | 17 | 30 |
| Comp. Example 3 | 22.8 | 0.2 | 0.77 | 84 | 2 | 13 |

|  | SiO$_x$ (x valence) | Void percentage (%) | True density (-) |
|---|---|---|---|
| Example 1 | 1.08 | 5.6 | 1.95 |
| Example 2 | 1.40 | 6.1 | 1.94 |
| Example 3 | 1.62 | 8.0 | 1.9 |
| Example 4 | 1.22 | 10.9 | 1.87 |
| Example 5 | 1.08 | 9.4 | 1.93 |
| Example 6 | 0.69 | 19.1 | 1.74 |
| Comp. Example 1 | 1.27 | 2.2 | 2.02 |
| Comp. Example 2 | 1.01 | 4.7 | 1.91 |
| Comp. Example 3 | 0.32 | 14.4 | 1.84 |

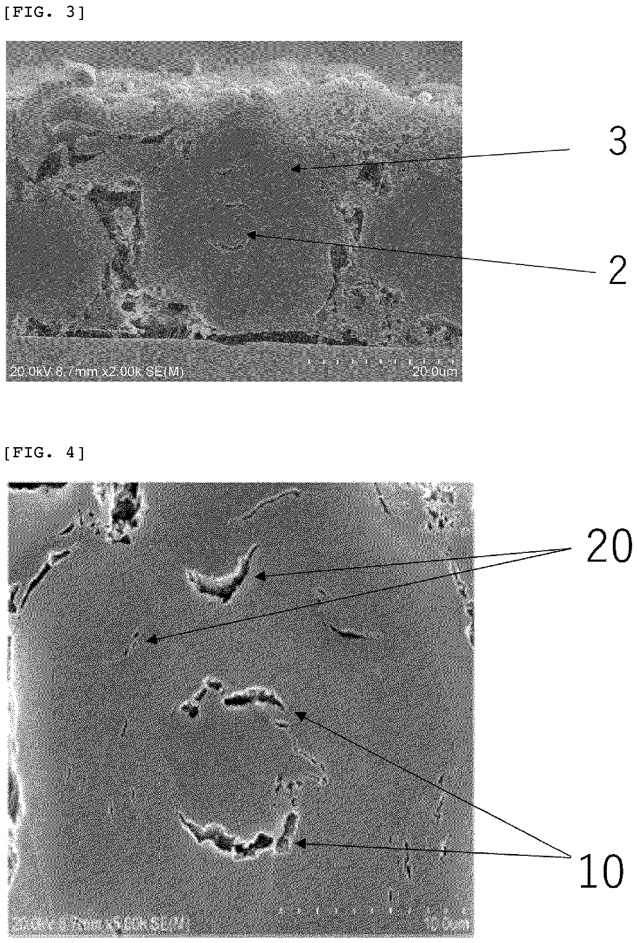

Fig. 2 shows an overview image of silicon-containing amorphous carbon particles obtained in Example 3. Figs. 3 and 4 show cross sectional photographs of silicon-containing amorphous carbon particles obtained in Example 3. As seen from Figs. 3 and 4, the silicon-containing amorphous carbon particle is a spherical particle having an outside particle size of 10 to 20 $\mu$m and comprises a core particle (2) comprising a soft carbon having a particle size of 5 to 6 $\mu$m and a shell (3) (second layer) present outside of the core particle (2) comprising SiO$_x$ particles having a particle size of 20 to 100 nm in which soft carbons having particle size of 1 $\mu$m or less are dispersed therein.

Voids are present in the sphere particle. Crescentic voids (10) are present concentrically where the core particle is centered. Especially, the voids present at the boundary of core particle and second layer are large and the length of long axis direction of such voids is 1 to 10 $\mu$m (length of short axis direction is 0.1 to 1 $\mu$m). Voids present at the inside of second layer (20) have a length of long axis direction of 0.01 to 8 $\mu$m (length of short axis direction is 0.01 to 0.5 $\mu$m). 20 or more voids having a length of long axis direction of 1 $\mu$m or more are present in one particle. 1000 or more voids having a length of long axis direction of 1 $\mu$m or less are present in one particle.

These voids can be confirmed in the particles obtained in the other Examples.

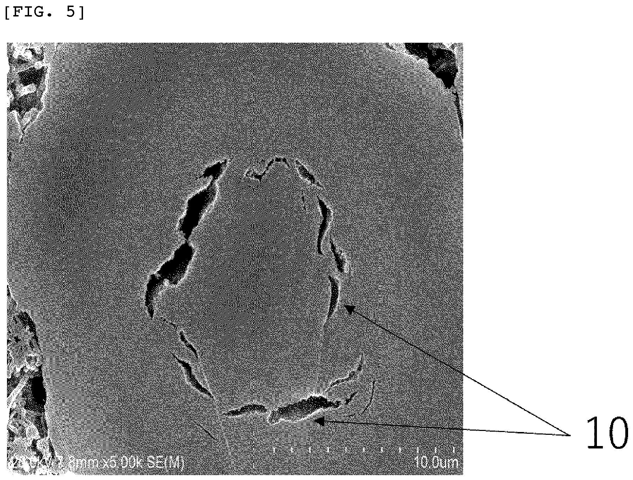

Fig. 5 shows a microscope photograph of a cross-section of silicon-containing amorphous carbon particles obtained in Comparative Example 1. As seen from Fig. 5, many crescentic voids are present between the core particle and shell portion but there is quite few void at the shell portion.

<Test results of battery performances>

Test results of silicon-containing amorphous carbon particles obtained in Examples 1 to 6 and Comparative Examples 1 to 3 are shown in Table 6.

Table 6

| | Initial charging capacity (mAh/g) | Initial discharging capacity (mAh/g) | Initial efficiency (%) | Capacity retention rate/30 cycles (%) |
|---|---|---|---|---|
| Example 1 | 1045 | 610 | 58 | 90 |
| Example 2 | 1140 | 642 | 56 | 90 |
| Example 3 | 1091 | 620 | 57 | 93 |
| Example 4 | 1319 | 822 | 62 | 88 |
| Example 5 | 1289 | 869 | 67 | 92 |
| Example 6 | 831 | 557 | 67 | 98 |
| Comp. Example 1 | 1073 | 620 | 58 | 87 |
| Comp. Example 2 | 1228 | 785 | 64 | 86 |
| Comp. Example 3 | 958 | 727 | 76 | 86 |

As seen from Table 6, comparing those with the same silicon raw material, it has been confirmed that the capacity retention rates in Examples 1 to 3, Examples 4 to 5 and Examples 5 to 6 are increased in comparison with those in Comparative Example 1, Comparative Example 2 and Comparative Example 3, respectively, while respective initial efficiencies are approximately equal level.

The change in the electrode thickness before and after the capacity retention rate measurement (30 cycles/before charging/discharging) was confirmed. The change in Example 5 with an Si content of 20 wt% was 1.19, while the change in Comparative Example 3 with an Si content of 10 wt% was 1.32. Thus, it has been confirmed that in Examples the change in electrode thickness due to charging and discharging is controlled.

INDUSTRIAL APPLICABILITY

The silicon-containing amorphous carbon particles according to an example of the present invention are useful as negative electrode materials for lithium ion secondary batteries or lithium ion capacitors used in power storage systems for, for example, electric vehicles, solar power generation, wind power generation, or the like.

REFERENCE SINGNS LISTS

1: Silicon-containing amorphous carbon particles
2: Core particle
3: Shell layer
10: Voids present between the core particle and the shell layer
20: Voids present in the shell layer
30: $SiO_x$ particles (0<x<1)

**Claims**

1. Silicon-containing amorphous carbon particles comprising an easy-graphitizable amorphous carbon containing silicon oxide particles having a chemical formula represented by $SiO_x$ (0<x<2), which silicon-containing amorphous carbon particles are spherical particles comprising a core particle present at the center portion and a shell layer formed on the outside of core particle, in which voids are present not only between said core particle and said shell layer but also in the shell layer.

2. Silicon-containing amorphous carbon particles according to claim 1, wherein the voids present between said core particle and said shell layer has a length of long axis direction of 1 to 10 $\mu$m and the voids present in the shell layer has a length of long axis direction of 0.01 to 8 $\mu$m.

3. A producing method of silicon-containing amorphous carbon particles as defined in claim 1 comprising:

   - a step of dry granulation comprising mixing

      -- a carbon material,
      -- silicon particles or silicon oxide particles, and
      -- a void forming agent, and

   - a step of carbonization of the obtained granulated particles under an inert gas atmosphere.

4. The producing method according to claim 3, wherein the void forming agent is at least one selected from the group consisting of (1) a polysaccharide having an exothermic peak of not lower than 300°C at the thermal decomposition or (2) a mineral oil whose fixed carbon content at a 1000°C calcination is not more than 10%.

5. The producing method according to claim 3, wherein the amount of added void forming agent is 10 to 50 wt% based on the total amount of the carbon material, and silicon particles or silicon oxide particles.

6. A lithium ion secondary battery comprising a negative electrode comprising silicon-containing amorphous carbon particles as defined in claim 1.

[FIG. 1]

[FIG. 2]

[FIG. 3]

[FIG. 4]

EP 4 318 675 A1

[FIG. 5]

10

19

## INTERNATIONAL SEARCH REPORT

| International application No. |
| --- |
| **PCT/JP2022/016349** |

**A.    CLASSIFICATION OF SUBJECT MATTER**

*H01M 4/587*(2010.01)i; *H01G 11/06*(2013.01)i; *H01G 11/30*(2013.01)i; *H01G 11/42*(2013.01)i; *H01M 4/36*(2006.01)i;
*H01M 4/48*(2010.01)i

FI:    H01M4/587; H01M4/36 E; H01M4/36 C; H01M4/48; H01G11/06; H01G11/42; H01G11/30

According to International Patent Classification (IPC) or to both national classification and IPC

**B.    FIELDS SEARCHED**

Minimum documentation searched (classification system followed by classification symbols)

H01M4/587; H01G11/06; H01G11/30; H01G11/42; H01M4/36; H01M4/48

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2018-81923 A (TODAKOGYO CORP.) 24 May 2018 (2018-05-24) | 1-6 |
| A | CN 104953122 A (RESEARCH INSTITUTE OF TSINGHUA UNIVERSITY IN SHENZHEN) 30 September 2015 (2015-09-30) | 1-6 |
| A | JP 2019-119669 A (SAMSUNG ELECTRONICS CO., LTD.) 22 July 2019 (2019-07-22) | 1-6 |
| A | JP 2017-27771 A (MITSUBISHI CHEMICALS CORP.) 02 February 2017 (2017-02-02) | 1-6 |
| A | US 2020/0194787 A1 (NATIONAL CHUNG-SHAN INSTITUTE OF SCIENCE AND TECHNOLOGY) 18 June 2020 (2020-06-18) | 1-6 |
| A | US 2018/0145316 A1 (SAMSUNG ELECTRONICS CO., LTD.) 24 May 2018 (2018-05-24) | 1-6 |

☐ Further documents are listed in the continuation of Box C.          ☑ See patent family annex.

| | |
| --- | --- |
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **26 May 2022** | **07 June 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

| | | International application No.<br>**PCT/JP2022/016349** |

| Patent document<br>cited in search report | | Publication date<br>(day/month/year) | Patent family member(s) | | | Publication date<br>(day/month/year) |
|---|---|---|---|---|---|---|
| JP | 2018-81923 A | 24 May 2018 | (Family: none) | | | |
| CN | 104953122 A | 30 September 2015 | (Family: none) | | | |
| JP | 2019-119669 A | 22 July 2019 | US | 2019/0207221 | A1 | |
| | | | EP | 3509136 | A1 | |
| | | | KR | 10-2019-0083613 | A | |
| | | | CN | 109994717 | A | |
| JP | 2017-27771 A | 02 February 2017 | US | 2018/0013146 | A1 | |
| | | | US | 2020/0185721 | A1 | |
| | | | WO | 2016/113952 | A1 | |
| | | | EP | 3246974 | A1 | |
| | | | CN | 107112536 | A | |
| | | | KR | 10-2017-0103003 | A | |
| US | 2020/0194787 A1 | 18 June 2020 | (Family: none) | | | |
| US | 2018/0145316 A1 | 24 May 2018 | US | 2021/0202938 | A1 | |
| | | | EP | 3324419 | A1 | |
| | | | KR | 10-2018-0056395 | A | |
| | | | CN | 108075117 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013030428 A
- JP 2005071938 A
- JP 2015090748 A